# FASCICULE DE BREVET EUROPEEN

(11) **EP 4 272 120 B1**
(45) Date de publication et mention de la délivrance du brevet: **06.08.2025**
(21) Numéro de dépôt: 21904619.0
(22) Date de dépôt: 24.12.2021
(51) Int. Cl.: G06K 19/077, B42D 25/00, B42D 25/30, B42D 25/351

(54) **CARTE A PUCE A BORD TRANSPARENT AUGMENTE**
CHIPKARTE MIT VERGRÖSSERTEM TRANSPARENTEN RAND
SMART CARD WITH ENLARGED TRANSPARENT EDGE

(30) Priorité: 31.12.2020 FR 2014305
(43) Date de publication de la demande: 08.11.2023
(73) Titulaire: Imprimerie Nationale, 75016 Paris (FR)
(72) Inventeur: MICHAU, Pascal Daniel, 59500 DOUAI (FR)
(74) Mandataire: Tranvouez, Edern Morgan
(86) Numéro de dépôt international: PCT/FR2021/000153
(87) Numéro de publication internationale: WO 2022/152978

(56) Documents cités:
- EP-A1- 2 322 356
- EP-A1- 3 391 294
- EP-B1- 3 391 294
- WO-A1-2019/040219
- US-A- 3 279 826
- US-A1- 2019 286 961

## Description

### Domaine de l'invention :

L'invention concerne le domaine des documents de sécurité tels que les cartes à puce à contact ou sans contact, ou les cartes en matière plastique, même dépourvues de puce, notamment celles aux formats connus sous la terminologie ID1 (format des cartes bancaires), ID2 qui correspond au double de ID1 (format des cartes nationales d'identité françaises), et ID3 (format des passeports). Pour simplifier l'exposé, on utilisera de façon générique le terme de « carte » pour désigner l'ensemble des cartes ou documents de sécurité de type précité.

### État de la Technique :

La plupart des cartes à puce ou autres documents de sécurité connus ont un corps de carte généralement multicouche, comportant au moins une couche de matériau opaque dont la surface correspond à la surface totale du document ou de la carte. Ceci permet de cacher dans le corps du document ou de la carte d'éventuels composants microélectroniques comme une puce, une ou plusieurs antennes etc. Cela permet en outre de présenter une surface maximale de carte ou de document qui peut faire l'objet d'une personnalisation graphique, à savoir l'impression d'informations relatives au titulaire ou à l'utilisation de la carte ou du document.

Les cartes totalement opaques, appelées aussi cartes à bords pleins, présentent l'inconvénient de pouvoir être délaminées, à savoir que des fraudeurs peuvent tenter de séparer les couches de la carte pour récupérer tel ou tel composant, notamment la puce intégrée dans le corps de carte.

Afin de rendre plus visibles les tentatives de manipulation frauduleuse des cartes, le document EP 1 770 608 B1 (Gemalto) décrit une structure de carte à bords transparents, comportant autour d'un insert opaque, une couche inférieure et une couche supérieure en matière transparente, séparées entre elles par une entretoise également en matière transparente. Cette entretoise forme un cadre transparent autour de la carte, l'hypothèse étant qu'une tentative de délamination de la carte laisserait des traces visibles dans le cadre transparent.

On connaît par ailleurs de par le document EP 3 391 294 A1 une nouvelle structure de carte à puce permettant de résoudre à la fois certains des inconvénients des cartes à bords transparents et des cartes à bords pleins. Selon ce document antérieur, la carte à puce comporte un complexe multicouche, encore appelé « coupon », présentant une zone opaque. Ce coupon est entouré par un cadre transparent. Cette carte à puce comporte en outre une couche en matière plastique translucide s'étendant sur toute la surface de la carte, y compris la zone du cadre auquel elle se superpose, et qui est suffisamment fine pour présenter une apparence translucide variable en fonction de son éclairage. Cette très fine couche translucide s'étend donc au-delà de la zone opaque du coupon et jusque dans la zone du cadre transparent, de manière à créer un effet visible de cadre translucide entourant le coupon opaque. La fine couche en matière plastique translucide contribue en outre à la résistance de la carte à la délamination. Cette structure est très avantageuse car elle résout un grand nombre d'inconvénients des cartes à puce qui possèdent une fenêtre transparente dans la zone du coupon. Cependant, du fait de la présence d'une couche translucide sur toute la surface de la carte, elle empêche l'obtention d'une carte possédant un cadre d'aspect non pas seulement translucide, mais totalement transparent.

Or le marché a exprimé le besoin pour des cartes à puce pourvues d'un cadre réellement transparent, dont une partie, notamment au moins un des coins, possède en outre une surface transparente élargie par rapport au reste du cadre, de façon par exemple à y loger un motif de sécurité, comme par exemple une photo secondaire du titulaire de la carte, ou une réplique d'une photo principale visible sur la partie centrale de la carte ou du document de sécurité.

Mais des essais ont démontré qu'il est très délicat de simplement augmenter la surface d'une zone du cadre transparent, en particulier dans la zone des coins. En effet, lorsqu'on enlève la fine couche translucide et résistante décrite dans le document EP 3 391 294 A1 précité de manière à conserver un cadre entièrement transparent, on fragilise nettement la carte. En effet, la carte ainsi obtenue ne résiste plus à certains tests d'impact, comme le test d'impact dit de « corner impact » en terminologie anglo-saxonne, de sorte que des délaminations s'ensuivent en particulier dans la zone des coins de la carte. La carte n'est alors plus conforme à certaines normes de résistance aux impacts, comme par exemple la norme MasterCard CQM 2016 TM-417 test 8170, ou la norme ANSI 322 2015 § 5.19, 6.1, 6.6.

### Buts de l'invention :

L'invention a pour but général de proposer une structure modifiée de document de sécurité sous forme de carte, notamment de carte à puce, pourvue d'un cadre transparent modifié et comprenant au moins un coin transparent dont la surface est augmentée pour pouvoir intégrer un motif de sécurité ayant des dimensions d'environ 9 mm x 11 mm, tout en garantissant que le document de sécurité ainsi modifié continue à remplir les conditions de résistance physique définies dans les normes précitées.

Un autre but de l'invention est de proposer un document de sécurité modifié qui permette un processus de fabrication classique et l'utilisation d'outils très peu modifiés par rapport à ceux nécessaires pour la fabrication des documents de sécurité tels que décrits dans le document EP 3 391 294 A1 précité.

L'invention sera décrite plus particulièrement dans le cadre d'un facteur de forme correspondant à celui d'une carte à puce au format ISO 7816 - 1, encore appelé format ID1, mais il est bien clair qu'elle s'applique à d'autres formats et à d'autres types de documents de sécurité.

L'invention a pour but plus particulier de proposer une carte dont les bords sont transparents, avec une possibilité d'augmenter la zone de transparence dans un ou plusieurs coins de la carte, tout en proposant une structure apte à résister aux tests d'impact normalisés.

Un autre but de l'invention est de proposer une carte dont les coins soient réalisés de manière à créer une rupture visuelle avec le reste de la carte et le reste des bords. De plus, cette rupture visuelle doit de préférence être de nature à renforcer la résistance de la carte à la contrefaçon en permettant d'intégrer des motifs de sécurité de 1^{er}, 2^{ème}, et 3^{ème} niveau.

On rappelle à cet égard que les niveaux de sécurité des éléments sécuritaires sont classés sur plusieurs niveaux.

Un élément de sécurité est dit de niveau 1 s'il est visible à l'œil nu en lumière ambiante.

Un élément de sécurité est dit de niveau 2 s'il n'est pas détectable à l'œil nu et si sa détection nécessite un outil de détection extérieur simple, comme une lampe UV à 365nm, ou une loupe à grossissement x8.

Un élément de sécurité est dit de niveau 3 s'il n'est pas détectable à l'œil nu et si sa détection nécessite un microscope ou un équipement très spécifique dit de laboratoire.

Concrètement, l'invention vise donc à proposer un document de sécurité pourvu d'un encadrement transparent à la lumière lors d'une observation normale, et pourvu d'au moins une zone de renflement suffisamment grande dans au moins un des coins de la carte pour y placer un motif de sécurité, sans nuire à la résistance physique de la carte.

Un but complémentaire de l'invention est de rendre atypique l'aspect physique de la carte pour rendre sa contrefaçon éventuelle plus difficile, et la détection de celle-ci bien plus facile.

### Objet de l'invention :

L'invention a par conséquent pour objet un document de sécurité sous forme de carte, comportant un coupon sous la forme d'un complexe multicouche présentant principalement une zone opaque et entouré par un cadre transparent, caractérisé en ce que ce coupon comporte une découpe dans au moins l'un de ses coins, et en ce que le cadre transparent comporte au niveau de cette découpe une zone de renflement de forme complémentaire à celle de ladite découpe, et la ligne de frontière entre ladite découpe et ledit renflement ayant une forme incurvée dissymétrique par rapport à la bissectrice de l'angle du coin correspondant au renflement du cadre transparent.

De cette manière, on obtient une carte dont le cadre transparent possède au moins un coin augmenté ou élargi permettant par exemple d'y intégrer un motif de sécurité.

En outre, de façon surprenante, cette configuration permet d'augmenter la résistance de la carte aux tests normalisés de résistance aux impacts. En effet, du fait de la dissymétrie de la ligne de frontière entre le coupon et le coin augmenté du cadre transparent, le coin augmenté du cadre transparent résiste bien mieux aux tests d'impact, et plus généralement la résistance physique de la carte est augmentée dans le coin considéré.

Selon un mode de réalisation, ledit motif de sécurité peut être constitué par un gaufrage tactile du matériau du cadre transparent, comme notamment une zone lenticulaire, une image fantôme, une image imprimée ou gravée en miniature identique ou complémentaire d'un motif de sécurité visible sur le coupon, un OVI (acronyme pour « Optical Variable Ink »), un OVD (acronyme pour « Optically Variable Device »), ou un hologramme. Ces motifs de sécurité sont bien connus en eux-mêmes et ne seront pas davantage décrits ici.

Selon un mode de réalisation préféré, la ligne de frontière entre le coupon et le renflement du cadre transparent est une ligne globalement incurvée vers le centre du document de sécurité et s'étendant à partir d'un coin du cadre transparent.

Selon un mode de réalisation avantageux, ladite ligne incurvée comporte une succession d'arcs de cercles non concentriques et dissymétriques par rapport à la bissectrice de l'angle du coin correspondant au renflement du cadre transparent.

Selon un mode de réalisation préféré, ladite ligne incurvée comporte une section centrale en forme de portion d'ellipse, entourée par deux sections latérales en forme de portions d'arcs de cercle dont les centres sont alignés selon une droite non perpendiculaire à ladite bissectrice.

L'invention prévoit de préférence que la zone de renflement du cadre transparent est incluse dans une zone de coin du document de sécurité ayant une longueur inférieure ou égale à 29 mm et une hauteur inférieure ou égale à 14 mm, ce qui permet de ne pas interférer avec les outils automatisés de préhension et de report du coupon lors de la fabrication de la carte.

Lorsqu'il s'agit d'un document de sécurité à fonctionnement sans contact, le coupon de la carte à puce formé par un complexe multicouche comporte parmi ses couches une feuille pourvue d'une antenne susceptible de communiquer avec une antenne d'un lecteur distant, et dont les spires sont adaptées et disposées de manière à ne pas traverser la zone de renflement d'un coin du cadre transparent.

L'invention sera mieux comprise à la lecture de la description à l'aide des dessins, dans lesquels :
- la Figure 1 représente une vue en perspective éclatée d'une carte selon l'état de la technique constitué par le document EP 3 391 294 A1 ;
- la Figure 2 représente une vue en coupe transversale d'une carte connue selon la figure 1 ;
- la Figure 3 représente une vue en plan d'une carte connue selon la figure 1 ;
- la Figure 4 représente une vue en perspective éclatée d'un mode de réalisation d'une carte selon l'invention, faisant apparaître un bord transparent avec un coin augmenté ;
- la Figure 5 représente une vue en coupe transversale et une vue en plan d'une carte selon la figure 4 ;
- la Figure 6 représente de façon schématique une vue en plan d'une carte pourvue d'un exemple de découpe symétrique à éviter ;
- la Figure 7 représente de façon schématique une vue en plan d'un mode de réalisation d'une carte selon l'invention, pourvue d'un coin transparent asymétrique;
- la Figure 8 représente une photographie d'un exemple de carte correspondant à un mode de réalisation de l'invention ;
- la Figure 9 représente un schéma d'un document de sécurité selon l'invention pendant son processus de fabrication, et les limites des zones du bord transparent qui peuvent être augmentées sans modifier le processus de fabrication ;
- la Figure 10 représente un schéma en transparence d'une carte à puce sans contact selon l'invention, comportant une antenne disposée de façon à ne pas interférer avec le coin augmenté du cadre transparent.

### Description détaillée :

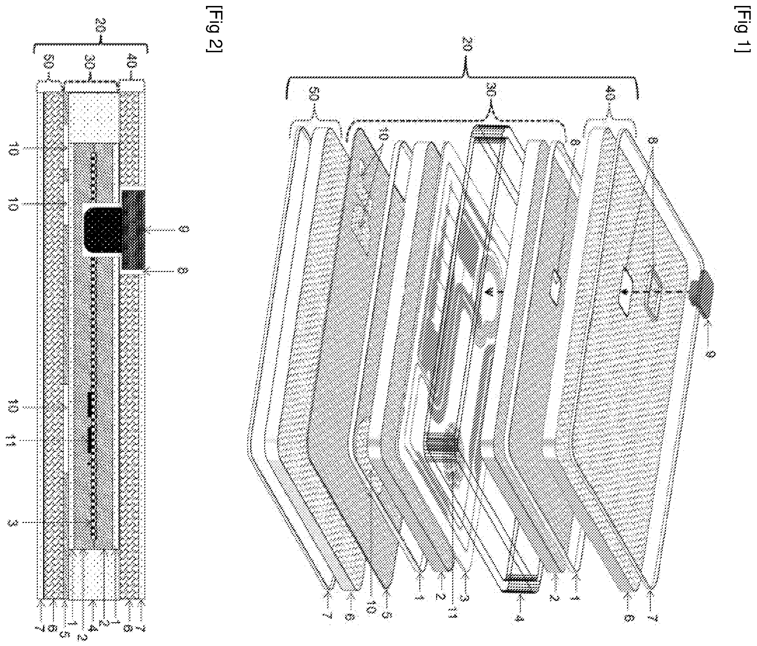

On se réfère aux figures 1 à 3. On a représenté dans ces figures un exemple d'une structure 20 de carte à puce selon l'état de la technique, composée d'un coupon 30 formé par un complexe multicouche, et de part et d'autre de ce complexe, une partie supérieure 40 et une partie inférieure 50 solidarisées avec le complexe multicouche, typiquement par lamination à chaud.

Le complexe multicouche 30 comporte un cadre 4 (ou une portion de cadre, comme un ou plusieurs bords) transparent à la lumière, et une partie opaque disposée à l'intérieur du cadre transparent. Une telle structure peut être obtenue de diverses manières, allant de la plus simple (un cadre transparent entourant une seule couche opaque de dimension inférieure à celle du cadre et placée à l'intérieur du cadre), à des structures plus complexes dans lesquelles le cadre transparent entoure des structures multicouches opaques.

Dans l'exemple connu représenté, le coupon ou complexe multicouche 30 comporte un cadre transparent 4, entourant une partie centrale constituée d'une superposition de 5 couches, à savoir de haut en bas, une couche transparente 1 dans laquelle est réalisée une cavité 8 pour l'intégration d'un module microélectronique 9 apparent, une couche opaque 2, une feuille 3 comportant une antenne métallique gravée, une nouvelle couche opaque 2, une nouvelle couche transparente 1, et une couche 5 d'apparence variable comportant une ou plusieurs découpes localisées 10.

Une telle structure multicouche est connue en soi. Il en existe d'autres, avec plus ou moins de couches, et en fonction des objectifs recherchés, les épaisseurs et la nature des couches (transparente, opaque, translucide, colorée) peuvent varier en fonction des besoins de la construction de la carte et de l'intégration souhaitée ou non d'éléments de sécurité, l'objectif étant d'obtenir des cartes à puce à contact compatibles avec les dimensions de la norme ISO 7816-1 (épaisseur de carte allant de 680 micromètres à 840 micromètres), et des cartes à puce sans contact sensiblement de la même épaisseur, voire légèrement supérieure.

Dans le document antérieur EP 3 391 294 A1 précité, la couche 5 est d'apparence opaque lorsque l'observateur la regarde du point de vue d'une source de lumière, et elle est d'apparence translucide lorsque l'observateur la regarde en face d'une source de lumière. Pour simplifier, on dira que la couche 5 est "translucide". La surface de cette couche translucide 5 est égale à la surface totale du complexe multicouche 30, c'est-à-dire que la couche 5 déborde des couches centrales (1, 2, 3) pour venir recouvrir au moins en partie, voire totalement, la surface du cadre transparent 4.

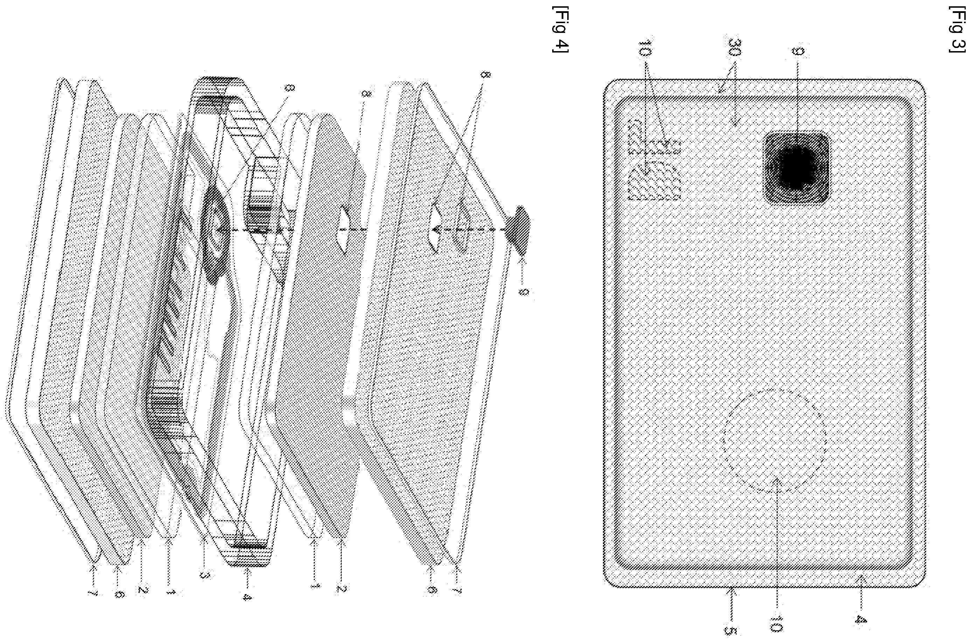

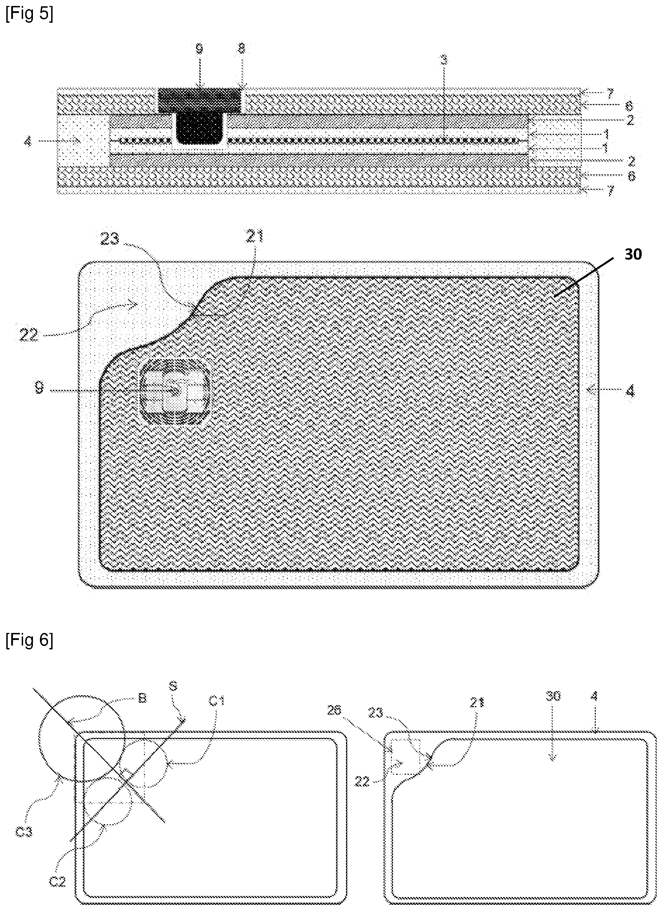

Mais dans le cadre de la présente invention, comme schématisé en figures 4 et 5, il importe que le document de sécurité ne présente pas de couche 5 translucide ou d'apparence variable en fonction de l'éclairage, de manière à conserver un cadre totalement transparent, demandé par certains segments du marché.

En outre, le cadre transparent 4 présente dans au moins l'un des coins un renflement 22 localisé, suffisamment grand pour pouvoir y loger un élément de sécurité, tel qu'une petite photographie, un OVI, un OVD, un gaufrage tactile, une zone lenticulaire, ou tout autre élément de sécurité.

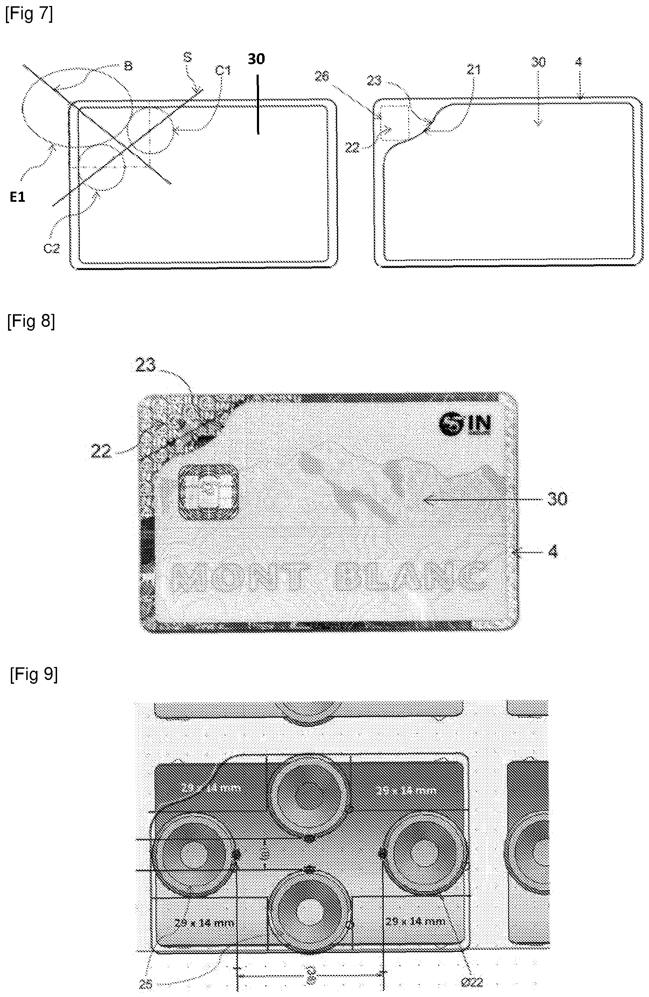

Un tel renflement 22 d'un coin du cadre transparent 4 suppose que le coupon comporte une découpe 21 de forme complémentaire à la forme du renflement 22. Un exemple d'une telle découpe 21 du coupon 30 est bien visible sur la vue en plan de la figure 5. Elle a pour effet de créer une ligne de frontière 23 entre un renflement 22 d'un coin du cadre transparent 4 (en l'occurrence le coin supérieur gauche du cadre transparent) et la découpe 21 correspondante du coupon. Autrement dit, la forme de la découpe 21 du coupon et la forme du renflement 22 sont complémentaires au niveau de la ligne de frontière 23. Comme visible sur la vue en plan de la figure 5, le renflement 22 du cadre transparent 4 a une forme sensiblement orientée vers le centre de la carte, ce qui crée un espace propice à l'insertion dans ce renflement 22 d'un motif de sécurité 26 (schématisé par un rectangle représenté dans la figure 7), comme une petite photographie.

Mais des essais ont prouvé, comme évoqué plus haut, que la forme de la découpe 21 du coupon 30 et celle du renflement 22 complémentaire du cadre transparent 4, et par conséquent la forme de la ligne de frontière 23, ne sont pas quelconques.

En effet, des essais ont montré que lorsque la découpe 21 est de forme droite, ou plus généralement de forme symétrique par rapport à la bissectrice B d'un angle de coin de la carte, la carte ainsi obtenue ne résiste plus à certains tests d'impact, comme le test dit de « corner impact » en terminologie anglo-saxonne, de sorte que des délaminations s'ensuivent en particulier dans la zone des coins transparents augmentés de la carte.

Cela serait par exemple le cas avec une forme de découpe comme celle représentée en partie droite de la figure 6. La partie droite de cette figure montre une découpe 21 du coin supérieur gauche du coupon 30. Elle présente une forme incurvée orientée vers le centre du coupon 30 de la carte, et symétrique par rapport à la bissectrice B de l'angle du coin supérieur gauche de la carte. La partie gauche de la figure 7 représente de façon schématique la géométrie de la découpe 21 réalisée. Elle est formée par trois arcs de cercles contigus, appartenant aux cercles notés C1, C3 et C2, le cercle C3 étant centré sur le coin supérieur gauche de la carte, et les cercles C1, C2 étant tangents à lui et tangents à deux bords adjacents du cadre transparent 4 de la carte. On constate que dans ce cas, la forme de la ligne de frontière 23 entre la découpe 21 et le renflement 22 du cadre transparent présente un axe de symétrie par rapport à la bissectrice B de l'angle supérieur droit de la carte. En effet, la ligne de frontière 23 est alors une succession d'arcs de cercles symétriques par rapport à la bissectrice B, à savoir un arc du cercle C3 centré sur la bissectrice B, et de part et d'autre deux arcs de cercles des cercles C1, C2 dont les centres sont symétriques par rapport à la bissectrice B, autrement dit, dont les centres sont alignés sur une droite sécante S perpendiculaire à la bissectrice B.

Cette disposition de ligne frontière 23 symétrique par rapport à la bissectrice B fragilise la carte en créant une amorce de pliage et de délamination, et doit être évitée.

Pour remédier à cela, il a été constaté de façon surprenante que le problème d'amorce de pliage et de délamination est résolu lorsque la ligne de frontière 23 entre la découpe 21 du coupon 30 et le renflement 22 correspondant du cadre transparent 4 présente une dissymétrie par rapport à la bissectrice B de l'angle de la carte où le renflement 22 du cadre transparent est réalisé.

Un exemple de solution est représenté en figure 7. Dans ce cas, la découpe 21 du coupon et la ligne de frontière 23 qui en résulte ont toujours une forme incurvée vers le centre de la carte, mais elle est maintenant constituée par la succession d'un premier arc de cercle appartenant au cercle C1, d'un arc d'ellipse appartenant à une ellipse E1 dont le grand axe est parallèle au grand côté du coupon 30, et d'un second arc de cercle appartenant au cercle C2. Les cercles C1 et C2 sont chacun tangents à un bord du cadre transparent 4, et à la circonférence de l'ellipse E1. Comme on le voit sur la partie gauche de la figure 7, les centres des cercles C1 et C2 sont maintenant situés sur une droite sécante S qui ne coupe plus la bissectrice B à angle droit. Autrement dit, la ligne de frontière 23 qui contient des arcs des cercles C1 et C2 et un arc de l'ellipse E1 est maintenant disposée de façon asymétrique par rapport à la bissectrice B. Une découpe 21 et un renflement 22 réalisés selon cette géométrie génèrent une ligne de frontière 23 qui a une forme dissymétrique par rapport à la bissectrice B de l'angle supérieur gauche de la carte.

Bien entendu, des structures dissymétriques similaires peuvent être obtenues aux autres coins de la carte.

Dans la figure 8 on a représenté un exemple réel de carte obtenue avec un coin supérieur gauche transparent augmenté conformément à la géométrie de la figure 7. Le coin supérieur gauche du cadre 4 de la carte présente un renflement 22 du cadre, dans lequel est imprimé un motif de sécurité personnalisé (en l'occurrence un câble de téléphérique), en surimpression avec un gaufrage tactile de l'ensemble du cadre transparent 4, intégrant dans cet exemple un logo « IN ». Cela permet à la fois d'accroitre la sécurité et la résistance physique, ainsi que les possibilités de personnalisation des documents sécurisés comme les cartes à puce.

De façon avantageuse, la réalisation de zones augmentées 22 dans les coins du cadre transparent 4 peut rester compatible avec les étapes de manutention du coupon de la carte pendant le processus de fabrication. Ainsi, en figure 9 on a représenté les emplacements des ventouses de préhension 25 qui viennent positionner le coupon 30 sur la couche de matériau formant le cadre transparent 4. Ces ventouses 25 sont typiquement disposées en croix, et laissent libres les quatre coins de la carte, sur des zones rectangulaires de dimensions 29 mm x 14 mm. Selon l'invention, il est utile que les découpes 21 du coupon 30, et par conséquent les zones augmentées du cadre transparent, soient situées dans une ou plusieurs de ces zones rectangulaires exploitables de dimensions 29 x 14 mm.

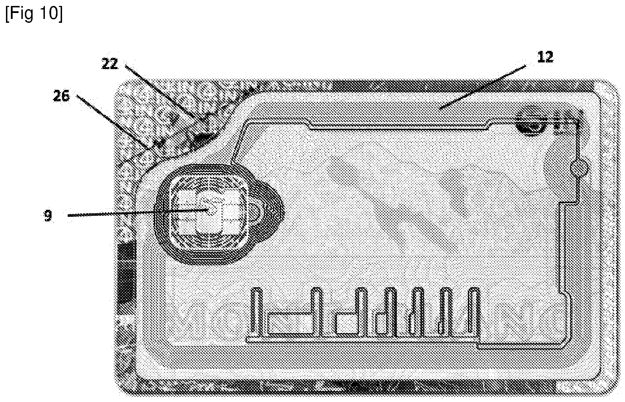

En figure 10 on a représenté en transparence une carte à double interface de communication à contact et sans contact. Elle est pourvue en partie gauche d'un module électronique 9 et d'une antenne dont les spires 12 ont une forme sensiblement rectangulaire et s'étendent le long des bords de la carte. Pour une telle carte à puce, l'invention prévoit que les spires 12 de l'antenne sont adaptées pour ne pas traverser la zone de renflement 22 du cadre transparent 4, de façon que les spires 12 de l'antenne n'interfèrent pas avec le coin transparent augmenté du cadre transparent et le motif de sécurité 26 qui y serait réalisé.

### Avantages de l'invention :

L'invention atteint les buts fixés. En particulier, elle permet de proposer un document de sécurité comprenant une ou plusieurs zones augmentées dans un ou plusieurs coins du cadre transparent, sans nuire à la résistance de ces coins aux tests de résistance physique comme les tests d'impact.

En outre, l'invention permet de ne modifier qu'à la marge le processus de fabrication fiable et économique déjà connu, puisqu'il suffit de modifier légèrement les outils de découpe du coupon et du cadre transparent du document.

L'invention permet également d'offrir une forte différentiation visuelle du document de sécurité par rapport aux documents existants, et une résistance accrue à la contrefaçon de documents de sécurité.

### Légendes des figures :

- 20.: Carte
- 30.: Complexe multicouche, ou coupon
- 40.: Couche supérieure de la carte
- 50.: Couche inférieure de la carte
- 1.: Couche transparente
- 2.: Couche opaque
- 3.: Couche antenne
- 4.: Cadre transparent
- 5.: Couche fine translucide
- 6.: Corps transparent imprimé
- 7.: Couche externe transparente
- 8.: Cavité du module
- 9.: Module électronique avec puce
- 10.: Fenêtre
- 12.: Spires d'antenne
- 21.: Découpe du coupon 30
- 22.: Renflement du bord transparent 4
- 23.: Ligne de frontière entre la découpe 21 et le renflement 22
- 25.: Ventouse de préhension
- 26.: Motif de sécurité

## Revendications

1. - Document de sécurité sous forme de carte, comportant un coupon (30) formé par un complexe multicouche présentant principalement une zone opaque et entouré par un cadre transparent (4), **caractérisé en ce que** :
- le coupon (30) comporte une découpe (21) dans au moins l'un de ses coins et
- le cadre transparent (4) comporte au niveau de cette découpe (21) une zone de renflement (22) de forme complémentaire à celle de ladite découpe (21), et
- la ligne de frontière (23) entre ladite découpe (21) et ledit renflement (22) a une forme incurvée dissymétrique par rapport à la bissectrice (B) de l'angle du coin du coupon (30) correspondant au renflement (22) du cadre transparent (4).

2. - Document de sécurité selon la revendication 1, **caractérisé en ce que** ledit renflement (22) du cadre transparent comporte un motif de sécurité (26).

3. - Document de sécurité selon la revendication 2, **caractérisé en ce que** ledit motif de sécurité (26) est constitué par un gaufrage tactile du matériau du cadre transparent (4), une zone lenticulaire, une image fantôme, une image imprimée ou gravée en miniature identique ou complémentaire d'un motif de sécurité (26) visible sur le coupon (30), un OVI, un OVD, ou un hologramme.

4. - Document de sécurité selon l'une quelconque des revendications 1 à 3, **caractérisé en ce que** la ligne de frontière (23) entre la découpe (21) du coupon (30) et le renflement (22) du cadre transparent (4) est une ligne globalement incurvée vers le centre du document de sécurité et s'étendant à partir d'un coin du cadre transparent.

5. - Document de sécurité selon l'une quelconque des revendications précédentes, **caractérisé en ce que** ladite ligne incurvée (23) comporte une succession d'arcs de cercles ou d'ellipse (C1, E1, C2, C3) dissymétriques par rapport à la bissectrice (B) de l'angle du coin correspondant au renflement (22) du cadre transparent (4).

6. - Document de sécurité selon l'une quelconque des revendications précédentes, **caractérisé en ce que** ladite ligne incurvée (23) comporte une section centrale en forme de portion d'ellipse (E1), entourée par deux sections latérales en forme de portions d'arcs de cercle (C1, C2) dont les centres sont alignés selon une droite non perpendiculaire à la bissectrice (B) de l'angle du coin correspondant au renflement (22) du cadre transparent (4).

7. - Document de sécurité selon la revendication 6, se présentant sous la forme d'une carte à puce au format normalisé ISO 7816, **caractérisé en ce que** la zone de renflement (22) du cadre transparent (4) est incluse dans une zone rectangulaire de coin du document de sécurité ayant une longueur inférieure ou égale à 29 mm et une hauteur inférieure ou égale à 14 mm.

8. - Document de sécurité selon l'une quelconque des revendications précédentes, **caractérisé en ce qu'**il se présente sous la forme d'une carte à puce ou sans puce au format dit ID1 correspondant à la norme ISO 7816 - 1, d'une carte au format dit ID2 qui correspond au double du format ID1, ou au format dit ID3 qui correspond au format normalisé des passeports.

9. - Document de sécurité selon l'une quelconque des revendications précédentes, **caractérisé en ce que** ledit coupon (30) comporte parmi ses couches une feuille (3) pourvue d'une antenne susceptible de communiquer avec une antenne d'un lecteur distant, et dont les spires (12) sont configurées de manière à ne pas traverser la zone de renflement (22) d'un coin du cadre transparent.

## Patentansprüche

1. Sicherheitsdokument in Form einer Karten, das einen Coupon (30) umfasst, der aus einem mehrschichtigen Komplex gebildet ist, der hauptsächlich einen undurchsichtigen Bereich aufweist und von einem transparenten Rahmen (4) umgeben ist, **dadurch gekennzeichnet, dass**:
- der Coupon (30) in mindestens einer seiner Ecken einen Ausschnitt (21) aufweist und
- der transparente Rahmen (4) im Bereich des Ausschnitts (21) einen Erhebungsbereich (22) mit einer Form aufweist, die komplementär zu der des Ausschnitts (21) geformt ist, und
- die Grenzlinie (23) zwischen dem Ausschnitt (21) und der Erhebung (22) eine gekrümmte Form aufweist, die in Bezug auf die Halbierende (B) des Winkels der Ecke des Coupons (30), die der Erhebung (22) des transparenten Rahmens (4) entspricht, asymmetrisch ist.

2. Sicherheitsdokument nach Anspruch 1, **dadurch gekennzeichnet, dass** die Erhebung (22) des transparenten Rahmens ein Sicherheitsmuster (26) aufweist.

3. Sicherheitsdokument nach Anspruch 2, **dadurch gekennzeichnet, dass** das Sicherheitsmuster (26) aus einer taktilen Prägung des Materials des transparenten Rahmens (4), einem Lentikularbereich, einem Geisterbild, einem gedruckten oder gravierten Miniaturbild, das mit einem auf dem Coupon (30) sichtbaren Sicherheitsmuster (26) identisch oder komplementär zu diesem ist, einer OVI, einer OVD oder einem Hologramm besteht.

4. Sicherheitsdokument nach einem der Ansprüche 1 bis 3, **dadurch gekennzeichnet, dass** die Grenzlinie (23) zwischen dem Ausschnitt (21) des Coupons (30) und der Erhebung (22) des transparenten Rahmens (4) eine insgesamt zur Mitte des Sicherheitsdokuments gekrümmte Linie ist und sich von einer Ecke des transparenten Rahmens aus erstreckt.

5. Sicherheitsdokument nach einem der vorhergehenden Ansprüche, **dadurch gekennzeichnet, dass** die gekrümmte Linie (23) eine Abfolge von Kreis- oder Ellipsenbögen (C1, E1, C2, C3) umfasst, die in Bezug auf die Halbierende (B) des Winkels der Ecke, die der Erhebung (22) des transparenten Rahmens (4) entspricht, asymmetrisch sind.

6. Sicherheitsdokument nach einem der vorhergehenden Ansprüche, **dadurch gekennzeichnet, dass** die gekrümmte Linie (23) einen mittleren Abschnitt in Form eines ellipsenförmigen Abschnitts (E1) umfasst, der von zwei seitlichen Abschnitten in Form von Kreisbogenabschnitten (C1, C2) umgeben ist, deren Mittelpunkte entlang einer Geraden ausgerichtet sind, die nicht rechtwinklig zur Halbierenden (B) des Winkels der Ecke verläuft, die der Erhebung (22) des transparenten Rahmens (4) entspricht.

7. Sicherheitsdokument nach Anspruch 6, in Form einer Chipkarte im genormten Format ISO 7816, **dadurch gekennzeichnet, dass** der Erhebungsbereich (22) des transparenten Rahmens (4) in einem rechteckigen Eckbereich des Sicherheitsdokuments mit einer Länge von 29 mm oder weniger und einer Höhe von 14 mm oder weniger eingeschlossen ist.

8. Sicherheitsdokument nach einem der vorhergehenden Ansprüche, **dadurch gekennzeichnet, dass** es in Form einer Chipkarte oder einer Karte ohne Chip im sogenannten ID1-Format, das der Norm ISO 7816-1 entspricht, einer Karte im sogenannten ID2-Format, das dem Doppelten des ID1-Formats entspricht, oder im sogenannten ID3-Format, das dem Standardformat von Reisepässen entspricht, vorliegt.

9. Sicherheitsdokument nach einem der vorhergehenden Ansprüche, **dadurch gekennzeichnet, dass** der Coupon (30) zwischen seinen Schichten eine Folie (3) umfasst, die mit einer Antenne versehen ist, die mit einer Antenne eines entfernten Lesers kommunizieren kann, und deren Windungen (12) so konfiguriert sind, dass sie den Erhebungsbereich (22) einer Ecke des transparenten Rahmens nicht durchqueren.

## Claims

1. Security document in the form of a card, including a coupon (30) formed by a multilayer complex having mainly an opaque area and surrounded by a transparent frame (4), **characterized in that**:
- the coupon (30) includes a cut-out (21) in at least one of its corners and
- the transparent frame (4) includes at this cutout (21) a bulge zone (22) of a shape complementary to that of said cutout (21), and
- the boundary line (23) between said cutout (21) and said bulge (22) has a curved shape asymmetrical with respect to the bisector (B) of the angle of the corner of the coupon (30) corresponding to the bulge (22) of the transparent frame (4).

2. Security document according to claim 1, **characterized in that** said bulge (22) of the transparent frame includes a security pattern (26).

3. Security document according to claim 2, **characterized in that** said security pattern (26) consists of a tactile embossing of the material of the transparent frame (4), a lenticular area, a phantom image, a miniature printed or engraved image identical to or complementary to a security pattern (26) visible on the coupon (30), an OVI, an OVD, or a hologram.

4. Security document according to any one of claims 1 to 3, **characterized in that** the boundary line (23) between the cutout (21) of the coupon (30) and the bulge (22) of the transparent frame (4) is a line curved overall towards the center of the security document and extending from a corner of the transparent frame.

5. Security document according to any one of the preceding claims, **characterized in that** said curved line (23) comprises a succession of arcs of circles or ellipses (C1, E1, C2, C3) asymmetrical with respect to the bisector (B) of the angle of the corner corresponding to the bulge (22) of the transparent frame (4).

6. Security document according to any one of the preceding claims, **characterized in that** said curved line (23) includes a central section in the form of an ellipse portion (E1), surrounded by two lateral sections in the form of portions of arcs of a circle (C1, C2) the centers of which are aligned on a straight line not perpendicular to the bisector (B) of the angle of the corner corresponding to the bulge (22) of the transparent frame (4).

7. Security document according to claim 6, in the form of a smart card in the standardized ISO 7816 format, **characterized in that** the bulge area (22) of the transparent frame (4) is included in a rectangular corner area of the security document having a length less than or equal to 29 mm and a height less than or equal to 14 mm.

8. Security document according to any one of the preceding claims, **characterized in that** it is in the form of a smart card or non-smart card in the so-called ID1 format corresponding to ISO 7816-1, a card in the so-called ID2 format which corresponds to the double of the ID1 format, or in the so-called ID3 format which corresponds to the standardized format of passports.

9. Security document according to any one of the preceding claims, **characterized in that** said coupon (30) includes among its layers a sheet (3) provided with an antenna capable of communicating with an antenna of a remote reader, and the coils (12) of which are configured so as not to cross the bulge area (22) of a corner of the transparent frame.
